Europäisches Patentamt

European Patent Office

Office européen des brevets

(11) Veröffentlichungsnummer: **0 314 830 B1**

# EUROPÄISCHE PATENTSCHRIFT

(45) Veröffentlichungstag der Patentschrift: **15.01.92**

(51) Int. Cl.⁵: **E04D 5/10**, E04D 3/35

(21) Anmeldenummer: **87116268.1**

(22) Anmeldetag: **05.11.87**

(54) **Wärmedämmaterial als Dämm- und Dichtschicht für Dachflächen.**

(43) Veröffentlichungstag der Anmeldung:
**10.05.89 Patentblatt  89/19**

(45) Bekanntmachung des Hinweises auf die
Patenterteilung:
**15.01.92 Patentblatt  92/03**

(84) Benannte Vertragsstaaten:
**AT BE CH DE ES FR GB GR IT LI LU NL SE**

(56) Entgegenhaltungen:
DE-A- 2 519 484     DE-A- 3 300 755
DE-U- 8 514 452     DE-U- 8 519 811
DE-U- 8 604 889     GB-A- 1 103 551
US-A- 3 455 076     US-A- 3 979 245

(73) Patentinhaber: **Prignitz, Herbert**
**Papyrusweg 12**
**W-2000 Hamburg 74(DE)**

(72) Erfinder: **Prignitz, Herbert**
**Papyrusweg 12**
**W-2000 Hamburg 74(DE)**

(74) Vertreter: **Richter, Werdermann & Gerbaulet**
**Neuer Wall 10**
**W-2000 Hamburg 36(DE)**

**Beschreibung**

Die Erfindung betrifft ein Wärmedämmaterial bestehend aus auf eine Unterlage kaschierte Dämmaterialstreifen, wobei zur Ausbildung eines Wärmedämmaterials als Dämm- und Dichtschicht für Dachflächen, das ermöglicht, grössere Flächen von mehreren Quadratmetern auf einmal zu belegen, die Dämmaterialstreifen auf eine geeignete Folienbahn kaschiert sind, wobei das Kaschiermaterial aus einer Kunststoffolie besteht, wie es aus der DE-OS 25 19 484 bekannt ist.

Es ist bekannt, bei Flachdächern, speziell bei sog. Warmdächern, die Dachdichtung in mehreren Lagen auf die Dämmung aufzubringen. Von den Dämmstoffherstellern wurde dieses mehrschichtige Aufbringen dadurch zu vereinfachen versucht, daß man Dämmelemente mit dem Normalmaß von 1 mal 0,5 m mit einer einfachen Dichtschicht mit zweiseitig überstehender Überlappung zur Verklebung mit bereits liegendem Material, bestehend aus bereits aufgebrachten Dämmelementen versah. Damit sollte die ganze Dachdeckung vereinfacht werden und das Dämmaterial gleich nach dem Verlegen gegen Witterungseinflüsse geschützt sein. Es mußten dann noch die eigentlichen Dichtschichten (zumindest eine) aufgebracht werden, weil durch das Aufbringen der Elemente zu kurze Überlappungen entstanden, die ein Eindringen von Feuchtigkeit von außen befürchten ließen.

Es wurden dann zur weiteren Vereinfachung und zum schnelleren Arbeitsablauf Rollbahnen hergestellt, die aus einer entsprechend breiten Dichtungsbahn mit einer Länge von bis zu 10 m bestanden, auf die Dämmaterialstreifen aufkaschiert wurden, die es ermöglichten, diese bis zu 10 m langen Bahnen aufzurollen. Diese Rollbahnen sind bis zu 1 m breit und decken bei einer Länge von 5 m eine Dachfläche von 5 m² auf einmal ab. 5 m war die verlangte Mindestlänge, um zu kurze Überlappungen der Elemente zu vermeiden.

Diese Rollbahnen ermöglichten das Aufrollen der Dämmstoffstreifen zu einer größeren Einheit für eine flächendeckende Verlegung. Als Dichtungsbahn werden dabei normale Bitumendachbahnen verwendet. Beim Aufrollen zeigen diese jedoch Knickfalten in der Trägerbahn, so daß Undichtigkeiten bei dem fertigen Flachdach zu befürchten sind. Es müssen daher zusätzlich mehrere, mindestens jedoch eine Dachbahn zusätzlich aufgebracht werden.

Auch heute wird bei Flachdächern, die ein Gefälle von 3 % und mehr haben, noch die Verlegung von mindestens zwei Dichtschichten auf einer Wärmedämmschicht gefordert. Bei weniger als 3 % Gefälle oder gar Null-Gefälle werden drei Dichtungs- oder Schweißbahnen auf der Wärmedämmschicht als handwerksgerecht angesehen.

Selbst die heute sehr weit entwickelten Kunststoffolien, die einlagig, auch bei Null-Gefälle-Dächern zugelassen sind, erfordern als Sicherung auf einer Wärmedämmung eine zusätzliche Unterlagsbahn zum Schutz der verlegten Folie an den Stößen der Wärmedämmung gegen Beschädigung und gegen Auswandern von z.B. Weichmachern aus der Foliendichtung. Die auf einer Rollbahn befindliche Trägerbahn, gleich welcher Art, wird jedoch als Schutz der Folie anerkannt.

Ein weiterer, bedeutender Nachteil bei der mehrlagigen Dachabdichtung ist die gefürchtete Blasenbildung auf dem Flachdach. Hervorgerufen wird diese durch nicht verklebte Stellen zwischen den Dichtschichten. Der geringste Einschluß von Feuchtigkeit beim Verlegen der Dichtschichten aufeinander oder auf dem Wärmedämmstoff führt zu unverklebten Stellen und damit unweigerlich zur Blasenbildung. Diese Blasenbildung wird oft auf den scheinbar entstehenden Dampfdruck, z.B. bei Sonneneinstrahlung zurückgeführt. Ein Dampfüberdruck gegen die Atmosphäre kann aber nur bei 100 °C und mehr auftreten. Die Blasenbildung in den Deckschichten ist aber nur durch die Volumenvergrößerung der eingeschlossenen Luft bei den unverklebten Stellen nach dem Gesetz von Gay-Lussac möglich. Nach diesem Gesetz verhalten sich die Luftvolumina wie die absoluten Temperaturen. Eine Aufblähung der Luft zwischen den einzelnen Dichtschichten ist daher unvermeidlich, wenn die Verbindung zwischen den einzelnen Dichtschichten durch entsprechende Verklebung oder Verschweißung nicht so hergestellt wird, daß mehrere Lagen zu einer werden und eine vollkommene Verbindung entsteht. Das ist aber so gut wie unmöglich. Besser geworden ist es durch das Verwenden von Schweißbahnen, wobei die Oberflächen der beiden zusammengefügten Bahnen verschmolzen werden. Die Blasenbildung kann also nur vermieden werden, wenn die aufeinanderliegenden Schichten bzw. Dichtschichten zu einer Einheit zusammengefügt werden.

Um eine Dachhaut unmittelbar mit der Isolierschicht aus mit senkrecht zur Oberfläche orientierten Mineralfasern zu verbinden, ohne daß eine Zwischenschicht zur Verbindung der Faserstreifen und ohne daß ein Klebstoff oder ein Bindemittel zur Verbindung der Dachhaut mit der Isolierschicht erforderlich ist, ist eine rollbare Dachdichtungsbahn verbunden mit einer Isolierschicht aus Mineralfaser-Streifen, bei denen die Faserrichtung senkrecht zur Dichtungsbahn angeordnet ist, vorgeschlagen worden, bei der vorgesehen ist, daß die Dichtungsbahn aus einem thermoplastischen Material besteht oder auf der der Isolierschicht zugekehrten Seite mit einem solchen Material beschichtet ist, wobei die Verbindung zwischen der Isolierschicht und der Dachdichtungsbahn dadurch hergestellt wird, daß die Dachdichtungsbahn unter einer Erhitzungsvorrichtung hindurchgezogen wird, die die Oberfläche der Dichtungsbahn in einen niedrig viskosen Zustand aufschmilzt, worauf die Isolierschicht in die viskose Schicht eingedrückt und bis zur Abkühlung und Erhärtung dieser viskosen Schicht in dieser Position festgehalten wird, ohne daß ein zusätzlicher Klebstoff verwendet wurde. Dabei ist die Isolierschicht bevorzugterweise schmaler als die Dachdichtungsbahn, so daß die Dachdichtungsbahn einen einseitig eingestellten überstand aufweist, der zur Verbindung mit der benachbarten Dichtungsbahn verwendet werden kann. Dabei ist vorgesehen, daß die Dämmaterialstreifen aus Mineralfasern bestehen und daß das Dämmaterial in Dämmaterialstreifen aufkaschiert wird. Eine solche Dachhaut soll vorschlagsgemäß mit einer Bitumenschweißbahn als thermoplastische Schicht verwendet werden. Es hat sich jedoch gezeigt, daß eine solche Schweißbahn nicht als Dichtschicht auf einem Flachdach ausreicht. Daher wird auch als Alternative vorgeschlagen, eine thermisch nicht aufweichbare Folie oder Bahn mit einer thermoplastischen Schicht zu verwenden, jedoch wird die thermoplastische Schicht nicht näher definiert, was darauf zurückzuführen sein dürfte, daß es sich hier um eine nicht verwirklichbare Aufgabenstellung und nicht um einen Lösungsvorschlag handelte (DE-OS 25 19 484).

Es ist daher Aufgabe der vorliegenden Erfindung, ein Wärmedämmaterial als Dämm- und Dichtschicht für Dachflächen zu schaffen, das als alleiniges Dachelement für die Dachflächen verwendbar ist, das auf größere Flächen auf einmal auflegbar ist, wobei die Nachteile der bekannten Lösung, wie die Bildung von Knickfalten und die Blasenbildung, vermeidbar sind.

Zur Lösung dieser Aufgabe wird ein Material der eingangs genannten Art vorgeschlagen, bei dem erfindungsgemäß vorgesehen ist, daß das Kaschiermaterial aus einer Kunststoffolie besteht, die Dämmaterialstreifen aus Polyurethan-Streifen, aus Polystyrol-Partikelschaum oder aus extrudiertem Polystyrol, bestehen, die Dämmaterialstreifen als in einer Laminatmaschine als Strang aufkaschiertes und anschließend geschnittenes Dämmaterial ausgebildet ist oder das Dämmaterial in Dämmaterialstreifen geschnitten aufkaschiert ist, wobei das Dämmaterial mit einem Stabilisierungsgewebe versehen ist, daß in das Dämmaterial an der dem einlagigen Kaschiermaterial gegenüberliegenden Fläche Diffusionskanäle eingearbeitet sind, und daß auf das Dämmaterial an der der einlagigen Dichtschichtkaschierung gegenüberliegenden Fläche eine Metallfolie aufkaschiert ist.

Mit einem derartigen Wärmedämmaterial kann eine Dachfläche in einem Arbeitsgang mit der erforderlichen Wärmedämmung und Dichtschicht versehen werden, ohne daß eine zusätzliche Dichtungsbahn aufgebracht werden muß, denn es ist durch die erfindungsgemäße Gestaltung möglich geworden, ein Wärmedämmaterial als Damm- und Dichtschicht für Dachflächen zu schaffen, das ermöglicht, größere Flächen von mehreren Quadratmetern auf einmal zu belegen, die Dämmaterialstreifen auf eine geeignete Folienbahn so als Dichtschicht kaschiert sind, daß das Wärmedämmaterial als Wärmedämmung und Dichtschicht ausgebildet ist, so daß bei Verlegung eine weitere Dichtbahn nicht aufgebracht werden muß. Damit kann eine ganz entscheidende Arbeits- und Materialersparnis erreicht werden, wobei gleichzeitig die Qualität der Dachbedeckung steigt, da durch die Verringerung der handwerklichen Tätigkeit eine Verringerung der Fehlermöglichkeiten erreicht wird.

Gemäß einer bevorzugten Ausführungsform ist dabei vorgesehen, daß das Kaschiermaterial aus einer Kunststofffolie besteht, während nach einer anderen Ausführungsform das Kaschiermaterial aus einer Metallfolie besteht. Wesentlich ist dabei, daß durch derartige Kaschiermaterialien gewährleistet ist, daß die Wärmedämmung so auf die Dachfläche aufgebracht wird, daß eine geeignete Wärmedämmung entsteht, auf der gleichzeitig eine Dichtschicht angeordnet ist, die ohne Schwierigkeiten in den Überlappungsbereichen verbindbar ist, so daß das Dämmaterial nach dem Verlegen gegen Witterungseinflüsse geschützt ist. Das Dämmaterial kann dabei nach einer bevorzugten Ausführungsform aus Polyurethan-Streifen bestehen, während nach einer anderen Ausführungsform vorgesehen ist, daß als Dämmaterial Polystyrol-Partikelschaum oder extrudiertes Polystyrol verwendet wird. Diese Ausbildung der Dämmaterialstreifen als Hartschaumstoffkörper führt zu einer optimalen Wärmedämmung, wobei bevorzugterweise vorgesehen ist, daß das Dämmaterial so hergestellt und/oder aufgebracht wird, daß die Dämmaterialstreifen im verlegten Zustand spaltfrei nebeneinander liegen.

Dabei ist vorgesehen, daß das Dämmaterial an seiner der Kaschierung gegenüberliegenden Fläche Diffusionskanäle aufweist. Diese können dadurch ausgebildet werden, daß auf der der Kaschierung gegenüberliegenden Fläche in regelmäßiger Anordnung Vorsprünge vorgesehen sind, die eine ballige, eine rippenartige, eine kegelstumpfförmige oder eine andere geometrische Form darstellende Ausbildung aufweisen.

Zur Erhöhung der Formstabilität des Wärmedämmaterials, insbesondere für höchste Beanspruchungen, ist vorgesehen worden, daß das Dämmaterial und/oder das Kaschierungsmaterial mit einem Stabilisierungs- oder Verstärkungsgewebe versehen ist, wobei auch das Kaschierungsmaterial mit einem Stabilisierungs- oder Verstärkungsgewebe versehbar ist.

Vorteilhafte und zweckmäßige Ausgestaltungen der Erfindung sind in den Unteransprüchen gekennzeichnet.

Ein Ausführungsbeispiel der Erfindung wird nachstehend anhand der Zeichnung erläutert. Es zeigen

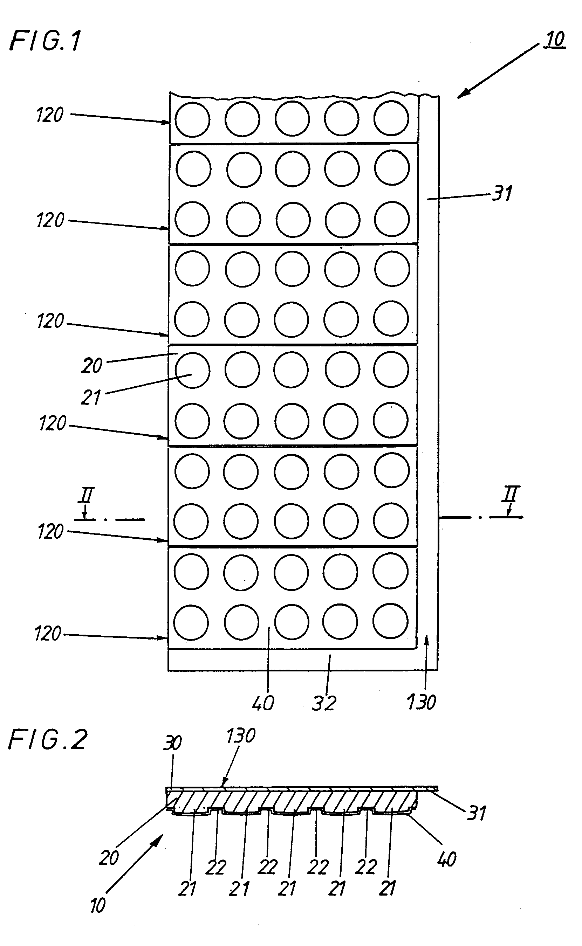

Fig. 1 einen Abschnitt eines Wärmedämmaterials in einer Ansicht von unten, und

Fig 2 das Wärmedämmaterial in einem senkrechten Schnitt gemäß Linie II-II in Fig.1.

Dabei ist das Wärmedämmaterial mit 10 bezeichnet, das aus der Folienbahn 130 als Dichtschicht und den darauf angeordneten Dämmaterialstreifen 120 als Dämmaterial 20 besteht. Die Folienbahn 130 weist dabei gegenüber den Dämmaterialstreifen 120 überstehende Ränder auf, die als Überlappungsabschnitte 31,32 dienen und jeweils an einer Längs- und einer Querkante angeordnet sind. Bei einer Nebeneinanderordnung der Wärmematerialbahn (in der Zeichnung nicht dargestellt) können entsprechende Überlappungsabschnitte 31,32 auf die bereits verlegten Dämmbahnen aufgelegt und miteinander verschweißt werden, so daß ein sicherer Schutz gegen Witterungseinflüsse entsteht.

Die Dämmaterialstreifen 120 bestehen dabei ausdem Dämmaterial 20, für das Polyurethan oder Polystyrol gewählt sein kann. Dabei sind auf der von der Folienbahn 130 abgewandten Seite der Dämmaterialstreifen 120 zur Ausbildung von Diffusionskanälen 22 ballige Vorsprünge 21 in regelmäßiger Anordnung vorgesehen. Diese sind als flache Kuppen ausgebildet, wobei auch jede andere geeignete Ausbildung und Anordnung vorgesehen sein kann, durch die gewährleistet ist, daß zwischen dem zu bedeckenden und in der Zeichnung nicht dargestellten Dach und dem Wärmedämmaterial 10 eine Entfeuchtungszone entsteht, in der sich dann ein Partialdruckverhältnis ergibt, das aufgrund seiner Relation zum Partialdruckverhältnis der Umgebungsluft zu einem Abführen der Feuchtigkeit von der Bauwerksoberfläche führt.

Durch die dargestellte Anordnung werden besonders breite und regelmäßige Dampfentspannungswege geschaffen, die eine sichere Entfeuchtung gewährleisten.

**Patentansprüche**

1. Wärmedämmaterial bestehend aus auf eine Unterlage kaschierte Dämmaterialstreifen (120), wobei zur Ausbildung eines Wärmedämmaterials als Dämm- und Dichtschicht für Dachflächen, das ermöglicht, größere Flächen von mehreren Quadratmetern auf einmal zu belegen, die Dämmaterialstreifen (120) auf eine geeignete Folienbahn kaschiert sind, wobei das Kaschiermaterial (30) aus einer Kunststoffolie besteht,
dadurch gekennzeichnet,
daß die Dämmaterialstreifen (120) aus Polyurethan-Streifen, aus Polystyrol-Partikelschaum oder aus extrudiertem Polystyrol oder aus Glasfaser- oder Steinwollestreifen bestehen, die Dämmaterialstreifen (120) als in einer Laminatmaschine als Strang aufkaschiertes und anschließend geschnittenes Dämmaterial (20) ausgebildet ist oder das Dämmaterial (20) in Dämmaterialstreifen (120) geschnitten aufkaschiert ist, wobei das Dämmaterial (20) mit einem Stabilisierungsgewebe versehen ist, daß in das Dämmaterial (20) an der dem einlagigen Kaschiermaterial (30) gegenüberliegenden Fläche Diffusionskanäle (22) eingearbeitet sind, und daß auf das Dämmaterial (20) an der der einlagigen Dichtschichtkaschierung (30) gegenüberliegenden Fläche eine Metallfolie (40) aufkaschiert ist.

2. Wärmedämmaterial nach Anspruch 1,
dadurch gekennzeichnet,
daß das Kaschiermaterial (30) aus durch ein Gewebe verstärktem Material besteht.

3. Wärmedämmaterial nach einem der Ansprüche 1 oder 2,
dadurch gekennzeichnet,
daß das Dämmaterial (20) in Platten hergestellt und beim Schneiden der Dämmaterialstreifen (120) die Platte nicht ganz durchteilt wird, so daß nch ein Zusammenhang der Dämmaterialstreifen (120) zum Aufkaschieren in größeren Flächen besteht.

4. Wärmedämmaterial nach einem der Ansprüche 1 bis 3,
dadurch gekennzeichnet,
daß das Kaschiermaterial (30) zur besseren Haftung der Dämmschichtstreifen oberflächig, zum Beispiel mit einem Vlies oder Gewebe aus Polyester- bzw. Glasfasern oder organischen Fasern, wie Jute oder dergleichen, versehen ist.

**Claims**

1. Heat insulating material comprising strips of insulating material (120) laminated on to a substrate, in which, in order to form a heat insulating material as insulating and sealing layer for roof areas which makes it possible to cover larger areas of several square meters in a single operation, the strips of insulating material (120) are laminated on to a suitable sheeting web, the laminating material (30) consisting in this case of a plastic sheeting,

characterized in that
the strips of insulating material (120) are comprised of polyurethane, of polystyrene particle foam or of extruded polystyrene or of strips of glass fiber or rock wool, in that the strips of insulating material (120) are constructed in the form of an insulating material laminated on in a laminating machine in the form of a strand and subsequently cut, or in that the insulating material (20) is laminated or cut into strips of insulating material (120), while the insulating material (20) is provided with a stabilizing fabric, in that, into the insulating material (20), on the surface located opposite the single-layer laminating material (30), diffusion channels (22) are incorporated, and in that, on to the insulating material (20), on the surface located opposite the single-layer sealing layer lamination (30), a metal foil (40) is laminated.

2. Heat insulating material according to Claim 1, characterized in that the laminating material (30) is comprised of a material reinforced by a fabric.

3. Heat insulating material according to either Claim 1 or 2, characterized in that the insulating material (20) is manufactured in panels and, when the strips of insulation material are cut, the panel is not cut through completely so that a connection between the strips of insulation material (120) still exists for the lamination over larger areas.

4. Heat insulation material according to any of Claims 1 to 3, characterized in that the laminating material (30), so as to ensure a better adhesion of the strips of insulating material, is, on the surface, by way of example, provided with a non-woven or a fabric of polyester or glass fibers or organic fibers, such as jute or the like.

**Revendications**

1. Matériau calorifuge constitué par des bandes de matériau isolant (120) contrecollées sur un support, les bandes de matériau isolant (120) étant contrecollées sur une bande de feuille appropriée pour former un matériau calorifuge comme couche d'isolation et d'étanchéité pour surfaces de toit qui permet de couvrir en une seule fois d'importantes surfaces de plusieurs mètres carrés, le matériau contrecollé (30) étant constitué par une feuille de matière plastique,
**caractérisé en ce**
que les bandes de matériau isolant (120) sont constituées par des bandes de polyuréthane, de mousse de particules de polystyrène ou de polystyrène extrudé ou de bandes de fibres de verre ou de laine minérale, les bandes de matériau isolant (120) étant configurées comme un matériau isolant (20) contrecollé comme boudin dans une machine à stratifié et découpé ensuite ou le matériau isolant (20) étant contrecollé en étant découpé en bandes de matériau isolant (120), le matériau isolant (20) étant équipé d'un tissu de stabilisation, que des canaux de diffusion (22) sont incorporés dans le matériau isolant (20) sur la surface opposée au matériau contrecollé en une couche et
qu'une feuille de métal (40) est contrecollée sur le matériau isolant (20) sur la surface opposée au contrecollage de la couche d'étanchéité (30).

2. Matériau calorifuge selon la revendication 1,
**caractérisé en ce**
que le matériau contrecollé (30) est constitué par une matière renforcée par un tissu.

3. Matériau calorifuge selon l'une des revendications 1 ou 2,
**caractérisé en ce**
que le matériau isolant (20) est fabriqué en plaques et que, lorsque l'on coupe des bandes de matériau isolant (120), la plaque n'est pas entièrement sectionnée si bien qu'il y a encore communication des bandes de matériau isolant (120) pour contrecoller sur des surfaces importantes.

4. Matériau calorifuge selon l'une des revendications 1 à 3,
**caractérisé en ce**
que le matériau contrecollé (30) est pourvu sur sa surface, pour une meilleure adhésion des bandes de couche d'isolation, par exemple d'un non-tissé ou d'un tissu en fibres de polyester ou de verre ou en fibres organiques, comme le jute ou équivalent.

FIG.1

120

120

120

120

20
21

120

II

120

120

10

31

II

40   32   130

FIG.2

30   130

20
10

21   22   21   22   21   22   21   22   21

31

40